# EUROPÄISCHE PATENTSCHRIFT

(11) **EP 4 139 141 B1**
(45) Veröffentlichungstag und Bekanntmachung des Hinweises auf die Patenterteilung: **17.04.2024**
(21) Anmeldenummer: 21710402.5
(22) Anmeldetag: 22.02.2021
(51) Int. Cl.: B60H 1/32, F24F 13/22, F25D 21/14, B60H 1/00

(54) **KLIMAANLAGE MIT EINER ABFÜHRVORRICHTUNG ZUM ABFÜHREN VON KONDENSWASSER**
AIR CONDITIONING SYSTEM HAVING A DISCHARGE DEVICE FOR DISCHARGING CONDENSED WATER
SYSTÈME DE CLIMATISATION DOTÉ D'UN DISPOSITIF D'ÉVACUATION POUR L'ÉVACUATION D'EAU CONDENSÉE

(30) Priorität: 22.04.2020 DE 102020002416
(43) Veröffentlichungstag der Anmeldung: 01.03.2023
(73) Patentinhaber: Truma Gerätetechnik GmbH & Co. KG, 85640 Putzbrunn (DE)
(72) Erfinder: BEYER, Andreas, 85640 Putzbrunn (DE); GUMPP, Daniel, 85640 Putzbrunn (DE); EIBL, Stefan, 85640 Putzbrunn (DE)
(74) Vertreter: Prinz & Partner mbB
(86) Internationale Anmeldenummer: PCT/EP2021/000019
(87) Internationale Veröffentlichungsnummer: WO 2021/213695

(56) Entgegenhaltungen:
- DE-A1-102009 060 909
- FR-A1- 2 944 481
- US-A- 5 791 156

## Beschreibung

Die Erfindung bezieht sich auf eine Klimaanlage mit einer Abführvorrichtung zum Abführen von Kondenswasser aus der Klimaanlage.

Klimaanlagen sind in vielen Anwendungsbereichen im Einsatz. Sie erlauben die Einstellung der Temperatur in einem Raum, wobei zumeist die Temperatur herabgesetzt wird. Weiterhin dienen sie der Trocknung der Raumluft, wobei die in der Luft befindliche Feuchtigkeit als Kondenswasser (eine alternativ gebrauchte Bezeichnung ist Kondensat) anfällt. Klimaanlagen werden z. B. in Wohnwägen oder Wohnmobilen - als Beispiele für bewegbare Gefährte - eingesetzt, wobei es bekannt ist, die eigentliche Klimaanlage auf dem Dach zu montieren und in dem zu temperierenden Raum einen Luftverteiler vorzusehen.

Das Kondenswasser wird in der Regel in Auffangvorrichtungen in der Klimaanlage gesammelt und dann daraus abgeführt. Hierfür sind im Wesentlichen zwei Varianten im Einsatz: So ist es bekannt, Öffnungen für das Ablaufen vorzusehen, über die das Kondenswasser auf das Dach des Gefährts tropft. Auch ist es bekannt, das Kondenswasser über ein Leitungssystem mit Schläuchen und Leitungen zu Ablaufstellen beispielsweise in Bodennähe zu führen.

Die FR 2 944 481 A1 offenbart eine Klimaanlage mit Abführvorrichtung für Kondenswasser mit einem Regelelement.

In der DE 698 00 470 T2 ist beispielsweise eine Wanne zum Sammeln des Kondenswassers beschrieben, die auf einen Schlauchabschnitt mündet. Die DE 10 2004 012 871 A1 offenbart eine Wanne unterhalb des Verdampfers zum Auffangen des Kondenswassers mit einem Schlauchanschluss in einer geneigten Grundfläche. Einen ähnlichen Aufbau zeigt die KR 10 2012 0 134 316 A. Einen zweiteiligen Schlauch zum Führen des Kondenswassers zeigt die DE 11 2014 006 214 T5. Die beiden Schlauchabschnitte sind jeweils mit einem Ende an einer Drainageeinrichtung sowie dem Armaturenbrett eines Fahrzeugs fixiert. Zwischen beiden Schlauchabschnitten befindet sich ein verdrehbares Koppelelement. Der DE 10 2014 217 174 A1 lässt sich eine Aufdachklimaanlage mit einer Sammelvorrichtung und einer Leitung für Kondenswasser entnehmen. In der EP 2 112 010 A1 ist eine weitere Aufdachklimaanlage mit mehreren Ausflusslöchern vorgesehen. Die FR 2 909 934 A1 beschreibt eine Vorrichtung für ein Fahrzeug mit zwei Wärmetauschern, mit denen die zu temperierende Luft entweder gekühlt oder erwärmt werden kann. Für eine Regelung der Temperatur der Luft ist eine bewegliche Klappe vorgesehen, welche den Luftstrom leitet.

### BESTÄTIGUNGSKOPIE

An einer Seite der Klappe befinden sich ein Schlitz und eine Rinne zum Abführen von Kondenswasser.

Welche der beiden Varianten (also direkte Öffnungen oder ein Leitungssystem) umgesetzt werden soll, hängt von der Art des Gefährts oder von individuellen Wünschen der Nutzer oder der Gegebenheiten ab. Daher ergibt sich die Notwendigkeit, Klimaanlagen für beide Varianten zu konstruieren und zu produzieren. Alternativ müssen Komponenten der Klimaanlagen ausgetauscht oder durch besondere Elemente ergänzt werden.

Daher besteht die der Erfindung zugrundeliegende Aufgabe darin, eine Klimaanlage mit einer Abführvorrichtung für das Kondenswasser vorzuschlagen, die eine Realisierung der beiden Varianten des Standes der Technik erlaubt.

Die Erfindung löst die Aufgabe durch eine Klimaanlage mit einer Abführvorrichtung zum Abführen von Kondenswasser aus einer Klimaanlage, wobei die Abführvorrichtung ein Leitungssystem zur Führung des Kondenswasser aufweist, wobei die Abführvorrichtung ein Regelelement aufweist, wobei das Regelelement als um eine Längsachse zwischen einer ersten Drehposition und einer zweiten Drehposition drehbare offene Rinne ausgestaltet ist, und wobei das Regelelement so ausgestaltet und angeordnet ist, dass das Regelelement in der ersten Drehposition das Kondenswasser innerhalb des Leitungssystems führt und in der zweiten Drehposition eine durchgehende Verbindung zwischen einer Abtropfstelle für das Kondenswasser und einem Außenbereich um die Klimaanlage herstellt.

Die erfindungsgemäße Vorrichtung zum Abführen des Kondenswassers der Klimaanlage verfügt über ein Leitungssystem und ein Regelelement. Das Regelelement ist dabei je nach Ausgestaltung ein Teil des Leitungssystems oder ist in Bezug auf das Führen des Kondenswassers mit dem Leitungssystem gekoppelt. Das Regelelement ist als offene Rinne ausgeführt, die um eine Längsachse drehbar ist. Ganz allgemein verfügt das Regelelement somit mindestens über einen geschlossenen und einen offenen Bereich. Durch das Drehen um die Längsachse ändert sich die Orientierung dieser Bereiche relativ zur Umgebung, sodass eher der geschlossene oder der geöffnete Bereich an der Führung des Kondenswassers beteiligt ist.

Das Regelelement verfügt über mindestens zwei definierte Drehpositionen (eine alternative Bezeichnung kann auch sein: Funktionseinstellungen), die jeweils mit einer bestimmten Führung des Kondenswassers verbunden sind. Die beide Drehpositionen sind je nach Ausgestaltung beispielsweise mit einem Einrasten verbunden oder es handelt sich um Endpositionen, sodass ein weiteres Drehen um die Längsachse über die beiden Drehpositionen hinaus nicht möglich ist, weil z. B. Anschläge das Weiterdrehen verhindern. Durch das Drehen des Regelelements zwischen den zwei Drehpositionen um die Längsachse des Regelelements wird das Kondenswasser entweder durch das Leitungssystem oder hinaus in die Umwelt geleitet. Die Abtropfstelle bezeichnet dabei ganz allgemein einen Übergang zwischen dem Bereich der Klimaanlage, in welchem sich das Kondenswasser bildet, und der Abführungsvorrichtung. Der Bereich zum Sammeln des Kondenswassers ist beispielsweise eine Auffangvorrichtung. Ein Vorteil der Abführvorrichtung besteht darin, dass das Regelelement ein Ablassen von Kondenswasser außerhalb des Leitungssystems zulässt. Ist somit beispielsweise das Leitungssystem teilweise verstopft oder eingefroren, so erlaubt das Regelelement das Abführen des Kondenswassers, indem das Regelelement gedreht wird.

Vorzugsweise ist das Regelelement so ausgestaltet und angeordnet, dass es durch das mechanische Eingreifen eines Nutzers um die Längsachse gedreht werden kann.

In einer Ausgestaltung ist vorgesehen, dass in einer Ebene (alternative Bezeichnung ist Schnitt) senkrecht zur Längsachse die Rinne des Regelelements oberhalb der Lage der Längsachse mündet. Mit anderen Worten: Die Rinne mündet in einer Ebene oberhalb der Ebene, in welcher die Längsachse liegt. Ergibt sich das Regelelement insbesondere aus einem bekannten geometrischen Körper - wie z. B. einem Zylinder -, so bedeutet die Ausgestaltung, dass die Rinne ein größeres Innenvolumen umschließt als das Volumen, das quasi durch den offenen oder fehlenden Bereich umschlossen wird. Der offene Bereich erstreckt sich vorzugsweise axial entlang der Längsachse des Regelelements.

Eine Ausgestaltung der Abführvorrichtung sieht vor, dass das Regelelement Verstärkungsrippen in einem seitlich offenen Bereich aufweist. In dieser Ausgestaltung verfügt das Regelelement über stabilisierende Strukturen in dem freien Bereich jenseits bzw. oberhalb der Rinnenform.

Eine Ausgestaltung der Abführvorrichtung besteht darin, dass das Regelelement einen nach außen ragenden Balkon aufweist. Der Balkon grenzt dabei vorzugsweise an die Rinnenform an und dient als Ausleger dafür, dass das Kondenswasser sicher aufgefangen wird. In einer Ausgestaltung ist der Balkon zumindest leicht geneigt, sodass in einer Drehposition das Kondenswasser in die Rinne hineinfließt. In einer weiteren Ausgestaltung wird der Balkon auf einer Außenseite von einer abschließenden Wandung begrenzt.

Eine Ausgestaltung der Abführvorrichtung besteht darin, dass das Regelelement im Wesentlichen die Form eines mit einem seitlich offenen Bereich versehenen Hohlzylinders aufweist. In einer Ausgestaltung hat der Hohlzylinder eine kreisförmige Grundfläche. In einer Ausgestaltung ist die Rinne tiefer als der Durchmesser der Grundfläche. Daher ist die Mantelfläche, die die Rinne bildet, größer als die durch den offenen Bereich fehlende Mantelfläche. Dadurch ist das Innenvolumen, das dem Führen und/oder dem Auffangen des Kondenswassers dient, größer als der durch den offenen Seitenbereich offene Anteil des durch die zylindrische Grundform gegebenen Innenvolumens.

Eine Ausgestaltung der Abführvorrichtung sieht vor, dass das Leitungssystem mehrere Schläuche und/oder Rohre aufweist.

Eine Ausgestaltung besteht darin, dass die Klimaanlage für eine Montage auf einem Dach eines beweglichen Gefährts ausgestaltet ist. Das bewegliche Gefährt ist beispielsweise ein Wohnwagen, ein Wohnmobil, ein Mobilheim oder ein Boot.

Im Einzelnen gibt es eine Vielzahl von Möglichkeiten, die erfindungsgemäße Klimaanlage auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigen die:
- Fig. 1:: eine schematische Darstellung eines Wohnwagens mit einer Klimaanlage,
- Fig. 2:: eine räumliche Darstellung einer ersten Ausgestaltung einer Abführvorrichtung,
- Fig. 3:: einen Schnitt durch die Abführvorrichtung der Fig. 2,
- Fig. 4:: eine räumliche Darstellung einer zweiten Ausgestaltung der Abführvorrichtung,
- Fig. 5:: einen vergrößerten Ausschnitt der Fig. 4 und
- Fig. 6:: einen Schnitt durch die Abführvorrichtung der Fig. 4.

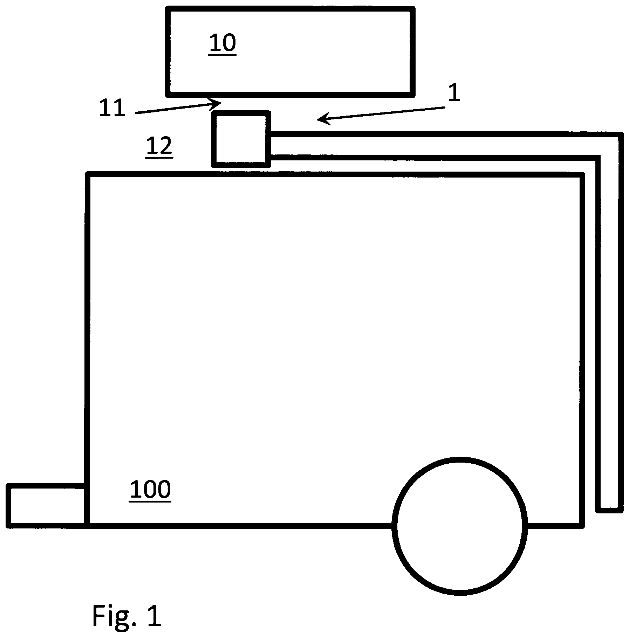

Die Fig. 1 zeigt schematisch einen Wohnwagen 100 als ein Beispiel für ein bewegtes Gefährt, auf dessen Dach sich eine Klimaanlage 10 - also eine sog. Dachklimaanlage - befindet. Der Betrieb der Klimaanlage 10 führt dazu, dass sich Kondenswasser in der Klimaanlage 10 bildet, welches auszubringen ist. Die hier vorhandene Abführvorrichtung 1 erlaubt das Umschalten zwischen dem Führen über das hier angedeutete Leitungssystem vom Dach des Wohnwagens 100 in Richtung des Bodens und dem direkten Ablassen des Kondenswassers auf das Dach des Wohnwagens 100 bzw. in den Außenbereich 12, welcher die Klimaanlage 10 umgibt. Das Kondenswasser geht dabei über eine Abtropfstelle 11 in die Abführvorrichtung 1 über. Die Abtropfstelle 11 ist dabei eine beliebige Sammelstelle für das Kondenswasser, an welchem das Kondenswasser übergeht in die Abführvorrichtung 1.

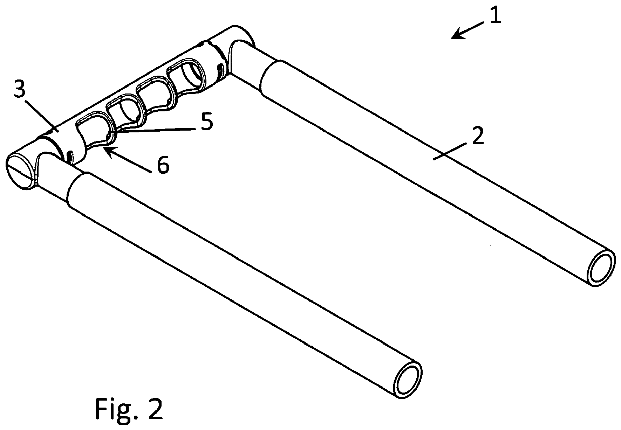

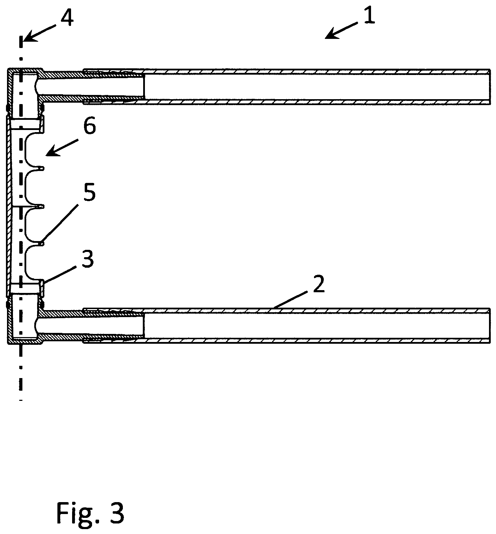

In der Fig. 2 sowie der Fig. 3, welche beide zusammen besprochen werden, ist eine erste Ausgestaltung der Abführvorrichtung 1 dargestellt.

Zu erkennen ist das Regelelement 3, welches sich zwischen den zwei Leitungen des Leitungssystems 2 befindet. Im eingebauten Zustand befindet sich vorzugsweise oberhalb des Regelelements 3 die Abtropfstelle 11, über die das Kondenswasser in die Abführvorrichtung 1 übergeht (vgl. Fig. 1).

In einer Ausgestaltung sind für eine Klimaanlage zwei Regelelemente 3 vorgesehen und spiegelsymmetrisch zu einer Längsachse der Klimaanlage angeordnet. Daher ist das Ablaufen des Kondenswassers bei zwei unterschiedlichen Schrägstellungen des bewegten Gefährts möglich.

Das Regelelement 3 baut auf der Form eines Hohlzylinders mit einer kreisförmigen Grundfläche auf, wobei ein seitlich offener Bereich 6 vorhanden ist, sodass sich insgesamt eine offene Rinne ergibt. Für die Stabilisierung des Regelelements 3 befinden sich in dem seitlich offenen Bereich 6 drei Verstärkungsrippen 5.

In der Fig. 3 mit der eingezeichneten Längsachse 4 ist zu erkennen, dass der seitlich offene Bereich 6 oberhalb der Längsachse 4 beginnt. Dadurch ist das durch den restlichen - geschlossenen - Teil des Regelelements 3 umschlossene Innenvolumen größer als das Volumen, das durch den offenen Bereich 6 ebenfalls offen ist und daher nicht das Kondenswasser umschließt. Da die Grundform des Regelelements 3 hier ein Zylinder mit kreisförmiger Grundfläche ist, ist damit die Tiefe der Rinne größer als der Radius der Grundfläche. Das Regelelement 3 ist um die Längsachse 4 herum drehbar. Insbesondere in der Fig. 3 ist zu erkennen, dass eine Drehposition dazu führt, dass sich eine freie Durchgangspassage für das Kondenswasser ergibt. Dies erlaubt es, dass das Kondenswasser direkt in den Außenbereich 12 um die Klimaanlage 10 herum entweichen kann. Wird das Regelelement 3 in eine andere Drehposition gedreht, so bildet die geschlossene Struktur des Regelelements 3 eine Art von Wanne, in der das Kondenswasser zu dem Leitungssystem 2 fließen kann. Dabei überragen dann die Randbereiche dieser Wanne die Höhenposition der Längsachse 4.

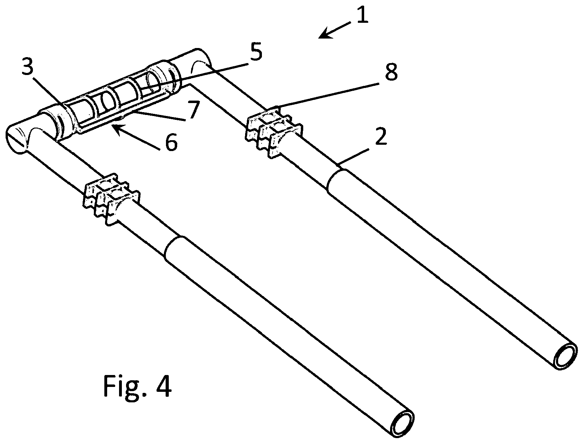

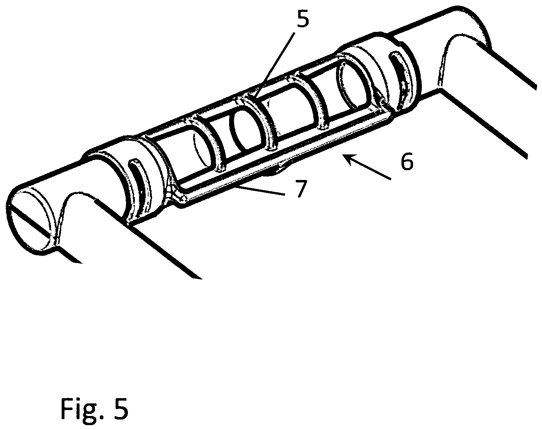

Eine zweite Ausgestaltung der Abführvorrichtung ist in den Fig. 4 bis 6 dargestellt, die gemeinsam beschrieben werden. Dabei werden nur die Unterschiede zur ersten Ausgestaltung diskutiert. In der Fig. 5 ist dabei ein vergrößerter Ausschnitt der Fig. 4 dargestellt.

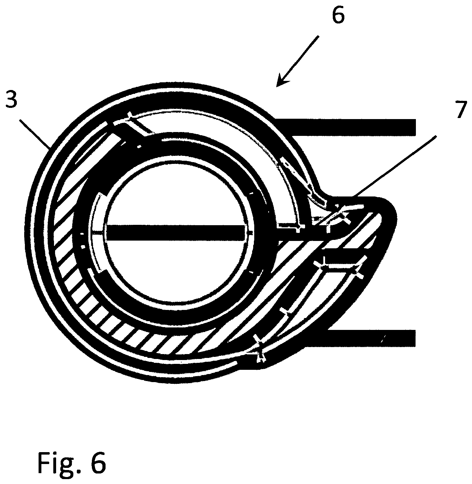

Das Regelelement 3 verfügt über einen radial nach außen ragenden Balkon 7, über den eine größere Auffangfläche für das Kondenswasser gegeben ist. Der Balkon 7 befindet sich dabei im in der Klimaanlage eingebauten Zustand in Richtung Innenraum. Weiterhin ist an den beiden Abschnitten des Leitungssystems 2 jeweils eine Dichtstruktur mit drei Dichtlippen vorhanden. Die Fig. 6 zeigt einen Schnitt durch das Regelelement 3 der Fig. 4 und 5, wobei das Regelelement 3 so gedreht ist, dass im eingebauten Zustand das Kondenswasser aufgefangen und weitergeleitet wird. Die Rinne ist somit in Erdschwererichtung nach oben offen. Zu erkennen ist, dass der Balkon 7 an seinem von der Rinne abgewandten Ende eine Berandung aufweist, die das Auffangen des Kondenswassers gewährleisten soll. Weiterhin ist zu erkennen, dass die Rinne oberhalb der Längs- oder Mittenachse mündet. Wird das Regelelement 3 in die andere Drehposition gedreht, in welcher das Kondenswasser ablaufen soll, so dient der Balkon 7 auch dem sicheren Ableiten des Kondenswassers.

### Bezugszeichenliste

- **1**: Abführvorrichtung
- **2**: Leitungssystem
- **3**: Regelelement
- **4**: Längsachse
- **5**: Verstärkungsrippe
- **6**: seitlich offener Bereich
- **7**: Balkon
- **8**: Dichtstruktur
- **10**: Klimaanlage
- **11**: Abtropfstelle
- **12**: Außenbereich

## Patentansprüche

1. Klimaanlage (10) mit einer Abführvorrichtung (1) zum Abführen von Kondenswasser aus der Klimaanlage (10),
wobei die Abführvorrichtung (1) ein Leitungssystem (2) zur Führung des Kondenswassers aufweist,
wobei die Abführvorrichtung (1) ein Regelelement (3) aufweist,
wobei das Regelelement (3) so ausgestaltet und angeordnet ist, dass das Regelelement (3) in der ersten Drehposition das Kondenswasser innerhalb des Leitungssystems (2) führt und in der zweiten Drehposition eine durchgehende Verbindung zwischen einer Abtropfstelle (11) für das Kondenswasser und einem Außenbereich (12) um die Klimaanlage (10) herstellt, **dadurch gekennzeichnet dass**
das Regelelement (3) als um eine Längsachse (4) zwischen einer ersten Drehposition und einer zweiten Drehposition drehbare offene Rinne ausgestaltet ist.

2. Klimaanlage (10) nach Anspruch 1,
wobei das Regelelement (3) Verstärkungsrippen (5) in einem seitlich offenen Bereich (6) aufweist.

3. Klimaanlage (10) nach Anspruch 1 oder 2,
wobei das Regelelement (3) einen nach außen ragenden Balkon (7) aufweist.

4. Klimaanlage (10) nach einem der Ansprüche 1 bis 3,
wobei das Regelelement (3) im Wesentlichen die Form eines mit einem seitlich offenen Bereich (6) versehenen Hohlzylinders aufweist.

5. Klimaanlage (10) nach einem der Ansprüche 1 bis 4,
wobei die Klimaanlage (10) für eine Montage auf einem Dach eines bewegbaren Gefährts (100) ausgestaltet ist.

## Claims

1. An air-conditioning system (10) comprising a discharge device (1) for discharging condensed water from the air-conditioning system (10),
wherein the discharge device (1) has a piping system (2) for guiding the condensed water,
wherein the discharge device (1) has a regulating element (3),
wherein the regulating element (3) is configured and arranged such that the regulating element (3) guides the condensed water inside the piping system (2) in the first rotational position and establishes a continuous connection between a drip-off point (11) for the condensed water and an outer area (12) around the air-conditioning system (10) in the second rotational position, **characterized in that** the regulating element (3) is configured as an open channel rotatable about a longitudinal axis (4) between a first rotational position and a second rotational position.

2. The air-conditioning system (10) according to claim 1,
wherein the regulating element (3) has reinforcing ribs (5) in a laterally open area (6).

3. The air-conditioning system (10) according to claim 1 or 2,
wherein the regulating element (3) has an outwardly projecting balcony (7).

4. The air-conditioning system (10) according to any of claims 1 to 3,
wherein the regulating element (3) is substantially in the form of a hollow cylinder provided with a laterally open area (6).

5. The air-conditioning system (10) according to any of claims 1 to 4,
wherein the air-conditioning system (10) is configured for mounting on a roof of a movable vehicle (100).

## Revendications

1. Installation de climatisation (10) comprenant un dispositif d'évacuation (1) pour l'évacuation d'eau de condensation hors de l'installation de climatisation (10),
le dispositif d'évacuation (1) présentant un système de tuyauterie (2) pour le guidage de l'eau de condensation,
le dispositif d'évacuation (1) présentant un élément de régulation (3),
l'élément de régulation (3) étant réalisé et agencé de sorte que l'élément de régulation (3) guide l'eau de condensation à l'intérieur du système de tuyauterie (2) dans la première position de rotation et établit une liaison continue entre un point d'égouttement (11) pour l'eau de condensation et une zone extérieure (12) autour de l'installation de climatisation (10) dans la deuxième position de rotation, **caractérisée en ce que** l'élément de régulation (3) est réalisé sous forme de canal ouvert mobile en rotation autour d'un axe longitudinal (4) entre une première position de rotation et une deuxième position de rotation.

2. Installation de climatisation (10) selon la revendication 1,
l'élément de régulation (3) présentant des nervures de renforcement (5) dans une zone latéralement ouverte (6).

3. Installation de climatisation (10) selon la revendication 1 ou 2,
l'élément de régulation (3) présentant un balcon (7) qui fait saillie vers l'extérieur.

4. Installation de climatisation (10) selon l'une des revendications 1 à 3,
l'élément de régulation (3) présentant sensiblement la forme d'un cylindre creux pourvu d'une zone latéralement ouverte (6).

5. Installation de climatisation (10) selon l'une des revendications 1 à 4,
l'installation de climatisation (10) étant réalisée pour le montage sur un toit d'un véhicule mobile (100).
